# EUROPÄISCHE PATENTANMELDUNG

(11) **EP 1 094 623 A2**
(43) Veröffentlichungstag der Anmeldung: **25.04.2001**
(21) Anmeldenummer: 00121793.4
(22) Anmeldetag: 05.10.2000
(51) Int. Cl.: H04B 10/10

(54) **Raumrichtung-berücksichtigende Simulation elektro-optischer Verbindungen**

(30) Priorität: 07.10.1999 DE 19948378
(71) Anmelder: SIEMENS AKTIENGESELLSCHAFT, 80333 München (DE)
(72) Erfinder: Bierhoff, Thomas, 33471 Volkmasern (DE); Griese, Elmar, Dr., 33100 Paderborn (DE); Himmler, Andreas, 33098 Paderborn (DE); Schrage, Jürgen, 59558 Lippstadt (DE); Wallrabenstein, Amir, 33813 Oerlinghausen (DE)

(57) **Zusammenfassung**

Simulation des Übetragungsverhaltens von opto-elektronischen Verbindungen, wobei der Sender oder der Empfänger durch mindestens zwei optischen Aus- bzw. Eingänge und die optische Leitung durch entsprechende Vielpole dargestellt wird, bei denen die räumliche Verteilung der emittierten bzw. empfangenen optischen Strahlung berücksichtigt wird.

## Beschreibung

### Technisches Gebiet

Die Erfindung betrifft eine Methode zur Bestimmung des Übertragungsverhaltens von elektro-optischen Verbindungen, insbesondere von Verbindungen im Innern von Geräten.

### Stand der Technik

In dem Artikel "Verhaltensbeschreibung für die Modellierung opto-elektronischer Systeme" von J. Becker, J. Haase und P. Schwarz, S.83-92 des Tagungsbandes des GMM-ITG-GI Workshop "Multi-Nature Systems" am 11.02.1999 in Jena, wird dargestellt, daß eine Modellierung von elektro-optischen Übertragungsstrecken durch die für elektrische Netzwerke bekannten Netzwerk-Simulatoren erfolgen kann. Dabei wird ein einfaches Modell bevorzugt, bei dem die gesamte, an einem Ausgang eines elektro-optischen Wandlers erzeugte bzw. empfangene Strahungsleistung durch einen einzigen Knoten des Modells simuliert wird. In dem Bericht wird auf S.86 unten auch ein nicht veröffentlichter Vorschlag erwähnt, bei dem mehrere Anschlüsse auf der optischen Seite vorgesehen sind, mit denen verschiedene optische Wellenlängen getrennt modelliert werden. Diese Variante ist für Wellenlängenmultiplex-Verfahren von Interesse, die im Bereich der Telekommunikation eingesetzt werden.

Für die Modellierung von Übertragungseigenschaften von optischen multimode-Wellenleitern ist insbesondere der Artikel von Th. Bierhoff et.al., "An Approach to Model Wave Propagation in Highly Multimodal Optical Waveguides with Rough Surfaces", Proc. X. Int.Symp. on Theoret. Electr. Eng., Magdeburg 1999, pp. 515-520, zu nennnen.

Aufgabe der Erfindung ist es, ein Verfahren anzugeben, mit dem der Übergang in und aus dem optischen Wellenleiter simuliert werden und ein komplexes Modell des optischen Wellenleiters bzw. der gesamten optischen Übertragungsstrecke eingesetzt werden kann.

### Darstellung der Erfindung

Die Erfindung verwendet die Erkenntnis, daß eine Aufteilung der Strahlung in jeweils vorbestimmte räumliche Richtungen eine wesentliche Verbesserung des Modells bezüglich des Senders und Empfängers bedeutet. Hinzugenommen wird das verbesserte Modell der optischen Übertragungsstrecke, welches nicht mehr einen einfachen Übertragungs-Vierpol (in Form gekoppelter Zweipole), sondern einen Vielpol mit einer Übertragungsmatrix darstellt. Die folgende Beschreibung zeigt an Hand eines Beispiels, wie Modellparameter bestimmt werden.

Es handelt sich also um ein Verfahren zur Simulation des Übertragungsverhaltens von opto-elektronischen Verbindungen, wobei der Sender oder der Empfänger (oder natürlich beide) durch mindestens zwei optischen Aus- bzw. Eingänge und die optische Leitung durch entsprechende Vielpole dargestellt wird, bei denen die Richtung und die räumliche Verteilung der emittierten bzw. empfangenen Strahlung berücksichtigt wird.

Weitere Merkmale und Vorteile der Erfindung ergeben sich aus der folgenden Beschreibung, welche in Verbindung mit den beigefügten Zeichnungen die Erfindung an Hand eines Ausführungsbeispiels erläutert.

### Kurzbeschreibung der Zeichnungen

Es zeigen
- Fig. 1: den Aufbau einer nachzubildenden Anordnung,
- Fig. 2a: das bevorzugte Modell für den Sender,
- Fig. 2b: das bevorzugte Modell für den Empfänger,
- Fig. 3: ein den Aufbau nach Fig. 1 nachbildendes elektrisches Netzwerk,
- Fig. 4a: eine Anordnung zur Bestimmung der Eigenschaften des Senders,
- Fig. 4b: eine Anordnung zur Bestimmung der Eigenschaften des Empfängers.

### Beschreibung einer Ausführungsform der Erfindung

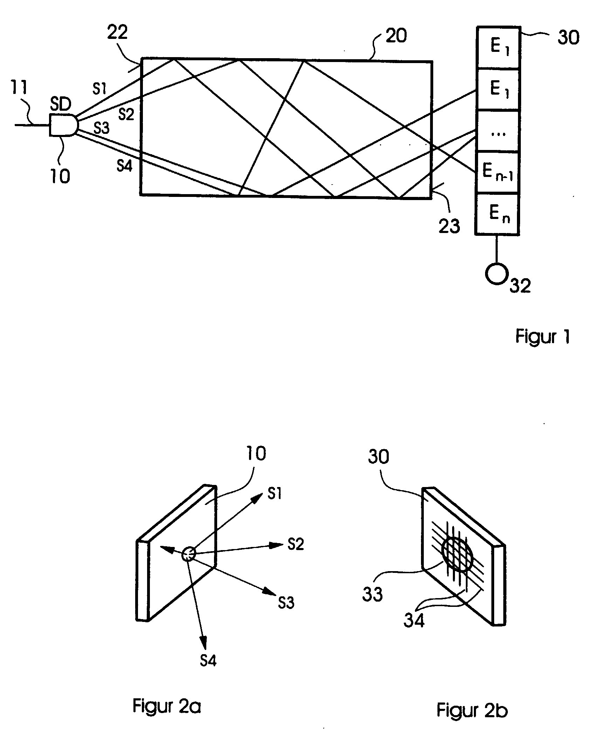

In Fig. 1 ist eine nachzubildende Anordnung zweidimensional dargestellt. Ein elekto-optischer Sender 10 hat einen elektrischen Anschluß 11. Bevorzugt werden hier vertikal emittierende Laserdioden eingesetzt, wie sie unter dem Kürzel VCSEL (Vertical-Cavity Surface-Emitting Laserdiodes) allgemein bekannt sind. Aber auch andere optische Quellen (z.B. Kantenemitter, LED, etc) können hier eingesetzt werden und modelliert werden. Aus diesem Sender tritt ein Strahlbündel, hier durch Strahlen S1, S2, S3 und S4 dargestellt, aus und trifft auf die Eingangsfläche 22 eines Lichtleiters 20. Die in den Lichtleiter eintretenden Strahlen, die durch die Linien symbolisiert sind, werden nach dem Prinzip des Lichtleiters an dem Rand durch Totalreflektion reflektiert und ggf. durch Rauhigkeiten gestreut und treten am Ende des Lichtleiters aus der Austrittsfläche 23 aus, im Falle von Lichtstreuungen kann auch ein Eingangsstrahl zu mehreren Ausgangsstrahlen führen. Sie treffen dann auf einen Empfänger 30, der wiederum einen welches den auf den Empfänger 30 in den Segmenten E1, E2, E3, En-1, En treffenden optischen Leistungen entspricht.

In Fig. 1 ist bereits angedeutet, daß der Empfänger für die Zwecke der Erfindung als aus Einzelelementen zusammengesetzt gedacht ist. Da die Fig. 1 eine zweidimensionale Projektion ist, ist im tatsächlich verwendeten Modell der Empfänger eine Fläche, die in Teilflächen aufgeteilt ist. Diese Aufteilung ist bevorzugt eine Kachelung mit quadratischem Raster, wie sie in Fig. 2b in perspektivischer Darstellung angedeutet ist.

Während der Empfänger bevorzugt durch eine planare Kachelung modelliert wird, ist beim Sender, wie in Fig.1 und Fig. 2a angedeutet, eine Aufteilung bevorzugt, bei der Strahlenbündel von einem gemeinsamen Zentrum ausgehen.

Diese Modellierung entspricht der Tatsache, daß die zur Zeit bevorzugten Sender eine im Verhältnis zum Durchmesser des Lichtleiters kleine Emissionsfläche haben, die damit im Modell punktförmig gedacht wird. Aber auch Flächenstrahler (mit ebenen und beliebig gekrümmten Flächen), bei denen die einzelnen Strahlen nicht von einem gemeinsamen Punkt ausgehen, können mit dem Verfahren modelliert werden.

Die Empfänger hingegen haben eine wesentlich größere Empfangsfläche, weil die Empfindlichkeit mit der Fläche steigt. Diese Fläche ist optimal nur wenig größer als die Austrittsfläche des Lichtleiters. Da der Empfänger bevorzugt ein planares Element ist, wird es dicht an die Austrittsfläche positioniert; der Abstand ist in Fig. 1 der Übersichtlichkeit halber übertrieben groß dargestellt.

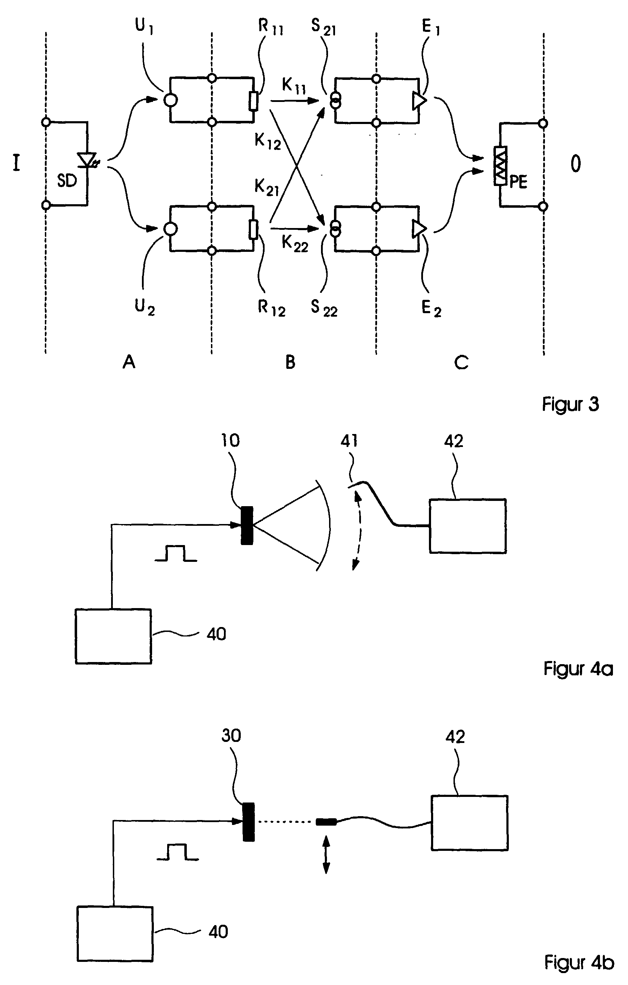

In Fig. 3 ist ein elektrisches Ersatzschaltbild dargestellt, das der einfachsten Anordnung entspricht. Dabei ist das elektrische Netzwerk in drei Bereiche A, B und C unterteilt, wobei A dem Sender, B der Leitung und C dem Empfänger entspricht.

Im Bereich A sind Eingangsklemmen I vorhanden, die dem elektrischen Anschluß des Senders entsprechen. Sie führen zu dem elektrischen Modell einer Sendediode SD, das die elektrische Eigenschaften am Eingang I, insbesondere die Impedanz, in bekannter Art nachbildet. Eine genaue Darstellung ist den Lehrbüchern über elektrische Netzwerke und den Datenblättern der jeweiligen Dioden zu entnehmen. Der durch die Diode SD fließende Strom steuert gemäß Steuerkennlinien die Spannungsquellen U1 und U2. Dies ist in Fig. 3 durch die zwei Pfeile von der Diode SD zu den Spannungsquellen U1 und U2 dargestellt. Die optische Sende-Intensität wird dabei durch die Spannung an den Spannungsquellen U1 und U2 dargestellt. In der Regel werden mehr als zwei Spannungsquellen vorhanden sein; es ist jedoch auch möglich, mit nur zweien zu arbeiten, wenn die abgestrahlte optische Leistung in nur zwei Raumbereiche beschrieben werden soll.

Die Eingangsfläche des durch den Bereich B modellierten Lichtleiters ist im Modell in zwei Bereiche unterteilt, die durch die Eingangswiderstände R11 und R12 dargestellt sind. Diese dienen insbesondere der Modellierung der Übergangsverluste beim Eintritt in den Lichleiter.

Analog sind Ausgangs-Stromquellen S21 und S22 vorgesehen, deren Strom über die Koppelfaktoren K11, K12, K21 und K22 von den Strömen durch die Eingangswiderstände R11 und R12 bestimmt sind. Die Koppelfaktoren werden bevorzugt durch Strahverfolgung bestimmt.

Im Bereich C von Fig. 3 ist der opto-elektrische Empfänger modelliert. An seinen hier zwei, in praktischer Anwendung entsprechend der gewählten Kachelung mehreren, Eingangsklemmen (-Paaren) werden die Ströme aus den Stromquellen S21 und S22 eingeprägt und erzeugen in den Empfängern E1 und E2 Signale, die durch die angedeuteten Pfeile in ein Photoelement PE eingekoppelt werden. Das Photoelement ist in der Regel eine Photodiode, deren Eigenschaften auf elektrischer Seite in bekannter Art durch ein entsprechendes Neztwerk modelliert werden. Damit entsteht ein elektrisches Signal am elektrischen Ausgang O.

Mit den Mitteln der allseits bekannten Analyse und Simulation kann nun die Übertragungsfunktion der gesamten Übertragungsstrecke bestimmt werden.

Dabei ist aus der Theorie der elektrischen Netzwerke hinlängglich bekannt, wie ggf. Stromquellen durch Spannungsquellen ersezt werden können und wie sich dann die Parameter transformieren. Auch ist bekannt, wie bei gemessenen oder, im Fall der Strahlverfolgung, berechneten Teil-Übertragungsfaktoren die bevorzugt durch Matrizen dargestellen Teil-Übertragungsfunktionen bestimmt und daraus eine Gesamt-Übertragungsfunktion berechnet werden kann. Hierbei werden auch bevorzugt Digitalrechner eingesetzt, insbesonder mit dem als Standard etabliertern Software-Paket SPICE in seinen verschiedenen Varianten, für das eine Vielzahl von Veröffentlichungen verfügbar ist.

Für die Übertragungsfunktion des Lichtleiters wird bevorzugt die Methode der Strahlspurberechnung (engl. 'ray tracing') verwendet, deren Anwendung auf Lichtleiter u.a. dem oben angeführten Dokument von Bierhoff et.al. entnommen werden kann. Dies ist im Prizip ein Problem der geometrischen Optik, dessen Lösung als allgemein zugänglich bezeichnet werden kann. Diese Lösung ist deshalb problemos möglich, weil die Eingangsstrahlen in der Raumrichtung bestimmt sind und die Transferfunktion als, ggf. zeitlich abhängiger, durch die am bezogenen Austrittspunt austretenden Intensität zur Eingangsintensität bestimmt werden kann. Mit Hilfe der so berechneten Werte kann, wie aus der Theorie der linearen elektrischen Netzwerke bekannt, die Transfermatrix berechnet werden. Die Bestimmung der Transferfunktionen durch andere numerische Verfahren oder durch Messung ist ebenfalls möglich.

Die Zuordnung der Ein- bzw. Ausgangskanäle zu Abstrahlrichtungen und damit zu Strahlkegeln im Raum ist meßtechnisch relativ gut zu bewältigen. In Fig. 4a ist eine entsprechende Anordnung skizziert. Die Sendediode wird konstant oder gepulst beaufschlagt; im letzteren Fall wird während der Ein- und Ausschaltphasen gemessen. Zur Messung dient ein auf eine dünne Spitze ausgezogene Lichtleitfaser, die im wesentlichen nur die achsenparallel an ihrer Spitze eintreffenden Lichtsignale aufnimmt und an einen am dickeren Ausgang angeordneten Lichtdetektor übergibt, dessen Ausgangssignal gemessen wird. Diese Lichleitfaser wird über eine aus der Robotertechnik bekannte Einrichtung im Raume derart in verschiedene Positionen gesteuert, daß die Achse der Spitze der Lichtleitfaser in Richtung auf das Zentrum der Diode gerichtet ist und ein vorbestimmter Abstand davon eingestellt ist. Damit kann die räumliche Verteilung gemessen und, gegebenenfalls nach Zusammenfassung benachbarter Strahlen, bestimmt werden. Damit ergeben sich die Steuerkennlinien im Innern des Modells der Diode, wie sie in Fig. 3 durch die zwei Pfeile zwischen dem Strom durch SD und der Spannung U1 bzw. U2 dargestellt werden. Alternativ zu der Bewegung der Meßsonde kann selbstverständlich in kinematischer Umkehr auch die Diode gedreht und gekippt werden. Wenn mit hinreichender Genaugkeit davon ausgegangen werden kann, daß die Strahlintensitäten axialkegelsymmetrisch sind, genügt eine ensprechende Rotation der Diode um eine Achse, die senkrecht zur Symmetrieachse der Diode durch den im wesentlichen punkförmigen Emnissionsfleck geht.

Für die Messung der Eigenschaften des Empfängers wird eine ähnliche Anornung nach Fig. 4b verwendet. Hierbei wird lediglich die Meßeinrichtung relativ zu der Empfangsdiode transversal, also in kartesischen Koordinaten gerastert, verschoben.

Es ist jedoch auch vorgesehen, alle konzentrisch gelegenen Raumrichtungen zusammenzufassen und damit eine Kegelhülle zu verwenden. Dies hat den Vorteil, daß nur relativ wenige dieser Kanäle notwendig sind; vorzugsweise sind dies drei Kanäle: Einen für den zyliner- oder kegelförmigen Zentralstrahl, den dritten für alle Signale mit großem Einfallswinkel und einen zweiten für den dazwischen liegenden Anteil. Allerdings kann damit nicht ein radialer Versatz des Senders bzw. Empfängers berücksichtigt werden.

Die bisherige Beschreibung hat zur besseren Verdeutlichung insbesondere für die optische Übertragungsstrecke ein Modell mit konzentrierten Elementen verwendet. Selbstverständlich kann jedes Modell, das ein Simulator benutzen kann, auch für die optische Übertragungsstrecke eingesetzt werden. Solche sind beispielsweise Modell für elektrische Wellenleiter oder Modelle der verzögerten Stromkopplung. Bevorzugt eingesetzt wird das in dem in der Einleitung erwähnten Artikel beschriebene Modell, das eine Faltungsalgebra verwendet und gleichfalls in Simulatoren verfügbar gemacht werden kann. Ferner kann auch die Berechnung der Übertragungseigenschaften durch das Modell der finiten Elemente erfolgen, auch wenn dies zur Zeit wegen des hohen Rechenbedarfs nicht generell attraktiv ist.

Die bisherige Beschreibung ging implizit davon aus, daß zur Modellierung ein Computerprogramm für die Simulation von elektrischen Schaltkreisen Verwendung findet. Selbstverständlich kann das Verfahren auch angewendet werden, indem das Netzwerk durch entsprechende elektrische Schaltungen, in der Regel nach Transformation in einen passenden Zeit- und Frequenzbereich, nachgebildet wird. Ein Beispiel für einen solchen Simulator ist unter der Bezeichnung "Analogrechner" hinreichend bekannt und beschrieben.

## Patentansprüche

1. Einrichtung zur Bestimmung des Übertragungsverhaltens von opto-elektronischen Verbindungen, bei denen ein elektro-optischer Sender über einen optischen Leiter mit einem opto-elektrischen Empfänger verbunden ist, und bei der die Bestimmung des Übertragungsverhaltens durch Berechnung von oder Messung an einem die Verbindung simulierenden elektrischen Netzwerk erfolgt, in dem das Sender-Teilmodell über ein Teilmodell der optischen Übertragungsstrecke mit dem Empfänger-Teilmodell verbunden ist,
**dadurch gekennzeichnet,**
daß das Sender-Teilmodell und das Empfänger-Teilmodell eine dem elektrischen Anschluß entsprechende Klemme und mindestens zwei, den optischen Aus- bzw. Eingängen entsprechenden Klemmen aufweisen, die das Abstrahl-Verhalten des Senders und die Empfangs-Charakteristik des Empfängers darstellen,
daß das Leiter-Teilmodell am Eingang soviele Klemmen aufweist wie das Sender-Teilmodell an seinem Ausgang und am Ausgang soviele Klemmen aufweist wie das Empfänger-Teilmodell an seinem Eingang,
und daß die Abstrahl-Komponenenten bzw. Empfangskomponenten durch die räumlichen Verteilung der optischen Signale bestimmt sind.

2. Verfahren nach Anspruch 1, wobei das Abstrahl-Verhalten des Senders durch eine Aufteilung in von einem Strahlzentrum ausgehende sterische Lichtbündel und die Empfangs-Charakteristik durch eine Kachelung einer Empfangs-Ebene gewonnen werden.

3. Einrichtung nach Anspruch 1 oder 2, bei das Teilmodell der optischen Übertragungsstrecke durch Strahlspurenberechnung gewonnen wird.

4. Einrichtung nach Anspruch 1 oder 2, bei das Teilmodell der optischen Übertragungsstrecke durch Messung bestimmt wird.

5. Einrichtung nach Anspruch 1 oder 2, bei das das Teilmodell der optischen Übertragungsstrecke durch andere numerische Verfahren berechnet wird.

6. Einrichtung nach einem der vorhergehenden Ansprüche, bei der die Sender- bzw. Empfänger-Teilmodelle bezüglich der räumlichen Verteilung durch Messung mit einem angenähert punktförmigen Sensor bzw. Emitter, der im Strahl- bzw. Emfpangsbereich räumlich bewegt wird, gewonnen werden.

7. Verfahren zu Bestimmung des Übertragungsverhaltens von opto-elektronischen Verbindungen, bei denen ein elektro-optischer Sender über einen optischen Leiter mit einem opto-elektrischen Empfänger verbunden ist, und die Bestimmung durch Berechnung oder Messung an einem rein elektrischen Netzwerk erfolgt,
**dadurch gekennzeichnet,**
daß das vom Sender in Abhängigkeit von dem zugeführten elektrischen Signal abgestrahlte optische Signal in mindestens zwei Abstrahl-Komponenten räumlich quantisiert bestimmt wird,
daß das vom Empfänger abgebene elektrische Signal als Funktion der in mindestens zwei Empfangs-Komponenten räumlich quantisierten optischen Sensitiviät bestimmt wird,
daß die dem Sender zugewandte Eintrittsfläche des optische Leiters in Eintritts-Teilflächen aufgeteilt wird, die den Abstrahl-Komponenten des Senders entsprechen,
daß die dem Empfänger zugewandte Austrittsfläche des optischen Leiters in Austritts-Teilflächen aufgeteilt wird, die den Empfangs-Komponenten des Empfängers entsprechen,
daß die Übertragungsfunktion des Lichtleiters von den Eintritts-Teilflächen zu den Austritts-Teilflächen bestimmt wird,
und daß die so bestimmten Funktionen verknüpft in einen Simulator für elektrische Schaltkreise eingegeben werden.

8. Verfahren nach Anspruch 7, wobei die Abstrahl-Komponenten des Senders durch eine Aufteilung in von einem Strahlzentrum ausgehende sterische Lichtbündel und die Empfangs-Komponenten durch eine Kachelung einer Empfangs-Ebene gewonnen werden.

9. Verfahren nach Anspruch 7, wobei die Abstrahl-Komponenten des Senders (Flächenstrahler) durch eine Aufteilung in von mehrern Quellpunkten ausgehenden Lichtstrahlen und die Empfangs-Komponenten durch eine entsprechende Kachelung einer Empfangs-Ebene gewonnen werden.

10. Verfahren nach Anspruch 7, wobei die Übertragungsfunktion der optischen Übertragungsstrecke durch Strahlspurenberechnung gewonnen wird.

11. Verfahren nach Anspruch 7, wobei die Übertragungsfunktion der optischen Übertragungsstrecke durch Messungen gewonnen wird.

12. Verfahren nach Anspruch 7, wobei die Übertragungsfunktion der optischen Übertragungsstrecke durch beliebige numerische Verfahren gewonnen wird.

13. Verfahren nach einem der vorhergehenden Ansprüche, bei der die Sender- bzw. Empfänger-Übertragungsfunktionen bezüglich der räumlichen Verteilung der emittierten optischen Leistung durch Messung mit einem angenähert punktförmigen Sensor bzw. Emitter, der im Strahl- bzw. Empfangsbereich räumlich bewegt wird, gewonnen werden.

14. Einrichtung zu Bestimmung der Abstrahl-Komponenten für einen Lichtsender mit einem Strahlzentrum, wobei ein Meß-Lichtleiter derart im Raum positioniert wird, daß seine Austrittsachse bei jeder Messung zum Strahlzentrum zeigt und jeweils gleichen Abstand hat.

15. Einrichtung zur Bestimmung der Empfangs-Komponenten für einen Lichtempfänger, wobei ein Meß-Lichtleiter über der Oberfläche des Lichtempfängers transversal derart verschoben wird, daß der Abstand zur Oberfläche des Lichtempfängers gleich bleibt.
